## Europäisches Patentamt

## European Patent Office

## Office européen des brevets

(19)

(11) Veröffentlichungsnummer : **0 001 230 B1**

(12) # EUROPÄISCHE PATENTSCHRIFT

(45) Veröffentlichungstag der Patentschrift :
11.02.81

(21) Anmeldenummer : 78100796.8

(22) Anmeldetag : 31.08.78

(51) Int. Cl.³ : **B 62 D 33/06**

(54) **Fahrerhaus für Lastkraftwagen mit Wohnwageneinbauten.**

(30) Priorität : 01.09.77 DE 2739415

(43) Veröffentlichungstag der Anmeldung :
04.04.79 (Patentblatt 79/07)

(45) Bekanntmachung des Hinweises auf die Patenterteilung : 11.02.81 Patentblatt 81/06

(84) Benannte Vertragsstaaten :
CH FR GB NL SE

(56) Entgegenhaltungen :
GB - A - 132 252
GB - A - 1 135 725
US - A - 3 353 861
US - A - 3 588 168

(73) Patentinhaber : MASCHINENFABRIK AUGS-
BURG-NRNBERG Aktiengesellschaft
Dachauer Strasse 667 Postfach 50 06 20
D-8000 München 50 (DE)

(72) Erfinder : Schmidt, Werner
Vogelloh 54
D-8000 München 50 (DE)
Erfinder : Watzek, Gerhard
Eduard-Spranger-Strasse 34
D-8000 München 45 (DE)

(74) Vertreter : Baum, Wolfgang, Dipl.-Ing.
Dachauer Strasse 667
D-8000 München 50 (DE)

Imprimerie Jouve, 17, rue du Louvre, 75001 Paris, France

## Fahrerhaus für Lastkraftwagen mit Wohnwageneinbauten

Die Erfindung bezieht sich auf ein Fahrerhaus für Lastkraftwagen, in dem hinter den Sitzen Wohnwageneinbauten vorgesehen sind, und eine erste an der Fahrerhausrückwand etwa in halber Höhe und über den Wohnwageneinbauten angebrachte Schlafliege.

Lastkraftwagen mit solcherart ausgebildeten Fahrerhäusern werden im Langstreckenverkehr eingesetzt, wo ein Lastkraftwagen oft eine Woche und länger von einem Ausgangspunkt zu einem Ziel unterwegs ist und wo sich der bzw. die Fahrer nicht auf fremde Serviceeinrichtungen verlassen können, da solche entweder überhaupt nicht oder aber im Regelfall nicht zu der Zeit zur Verfügung stehen, wo sie gebraucht werden. Mit Wohnwageneinbauten im Fahrerhaus, wie z. B. Vorrats- und Kleiderschränken, Koch- und Waschgelegenheit, können die Fahrer ihren Fahrplan völlig unabhängig von fremden Dienstleistungen gestalten.

Die oben erwähnten Wohnwageneinbauten haben aber den Nachteil, daß sie vor allem im Raum hinter den Fahrersitzen den Platz beanspruchen, in dem bei herkömmlichen Fahrerhäusern eine untere Schlafliege angeordnet war, so daß im Raum hinter den Fahrersitzen nur mehr eine Schlafliege, nämlich oberhalb der sich dort befindlichen Wohnwageneinbauten Platz findet. Es wird also der Vorteil der Unabhängigkeit von fremden Dienstleistungen mit dem Nachteil erkauft, daß zur selben Zeit nur einer der beiden Fahrer schlafen kann.

Aufgabe der vorliegenden Erfindung ist es, ein Fahrerhaus der gattungsgemäßen Art so auszubilden, daß für beide Fahrer Schlafliegen zur Verfügung stehen, wobei beide Schlafliegen bei Nichtgebrauch so verstaubar sein müssen, daß weder die Bequemlichkeit der Fahrer beim Fahren selbst noch bei der Benutzung der übrigen Wohnwageneinbauten beeinträchtigt wird.

Zur Lösung dieser Aufgabe wird erfindungsgemäß vorgeschlagen, daß eine zweite von der ersten unabhängige Schlafliege vorgesehen ist und eine Hubeinrichtung, mit der sie aus einer Betriebslage neben der ersten Schlafliege in eine waagrechte Verstaulage oberhalb der ersten Schlafliege am Fahrerhausdach verfahrbar ist.

Der Erfindung liegt die Erkenntnis zugrunde, daß bei Benutzung der beiden Schlafliegen gleichzeitig weder Fahrer- noch Beifahrersitz benutzt wird, so daß es unschädlich ist, wenn sich die zweite Schlafliege in Fahrtrichtung gesehen vor der an der Fahrerhausrückwand angelenkten ersten Schlafliege und über dem Fahrer- bzw. Beifahrersitz befindet. Die Lehnen der beiden Sitze können, falls sie stören, nach vorne geklappt werden, um aus dem von der zweiten Schlafliege eingenommenen Raum herausgebracht zu werden. Durch die Nebeneinanderanordnung der beiden Schlafliegen steht beiden Fahrern eine relativ große Kopffreiheit über den Schlafliegen zur Verfügung, die sogar größer ist als bei herkömmlichen Lösungen, bei denen zwei Schlafliegen übereinander im Raum hinter den Sitzen angeordnet waren. Von besonderem Vorteil ist die Verstaulage der zweiten Schlafliege oberhalb der ersten am Fahrerhausdach, da die Schlafliege dort in keiner Weise den von den Fahrern benutzten Raum beeinträchtigt und insbesondere die Benutzung der ersten Schlafliege in keiner Weise behindert.

Aus der US-A-33 53 861 ist ein Fahrerhaus für Lastkraftwagen bekannt, in dem hinter den Sitzen eine erste an der Fahrerhausrückwand etwa in halber Höhe angebrachte Schlafliege angeordnet ist. Im Gegensatz zu dem erfindungsgemäßen Fahrerhaus sind dort jedoch keine Wohnwageneinbauten hinter den Fahrersitzen vorgesehen sondern es ist im Bereich des Fußbodens eine zweite Schlafliege an der Fahrerhausrückwand angelenkt. Weiter ist im Gegensatz zur erfindungsgemäßen Vorrichtung die erste Schlafliege zweigeteilt, wobei die beiden Teile durch ein Schwenkscharnier miteinander verbunden sind. Bei Nichtgebrauch kann ein Teil der ersten Schlafliege an die Fahrerhausrückwand hochgeklappt werden, während das zweite Liegenteil rechtwinkelig zum ersten Liegenteil geschwenkt wird und sich somit horizontal im Raum oberhalb der zweiten Schlafliege befindet.

Aus der GB-A-132 252 ist eine klappbare Bettcouch bekannt, bei der in Betriebslage zwei oder drei Schlafliegen nebeneinander angeordnet sind, in Verstaulage zwei dieser Schlafliegen unmittelbar übereinander liegen, während die dritte senkrecht seitlich von den ersten beiden Schlafliegen angeordnet ist. Das in der vorliegenden Erfindung verwirklichte Prinzip, zwei Schlafliegen relativ zueinander so anzuordnen, daß sie in Betriebslage sich nebeneinander befinden, während in Verstaulage eine Schlafliege mit großem Abstand über der anderen angeordnet ist, wird dort nicht offenbart.

In weiterer Ausgestaltung der Erfindung wird vorgeschlagen, daß die Hubeinrichtung zwei Kragarme umfaßt, die um eine waagrechte parallel zur Fahrerhausrückwand verlaufende Achse schwenkbar gelagert sind und die Schlafliege an Kopf- und Fußende in Schwenklagern aufnehmen. Der Hauptvorteil dieser Hubeinrichtung liegt darin, daß keinerlei zusätzliche Beschläge oder Vorrichtungen in dem von den Fahrersitzen eingenommenen Raum vorgesehen werden müssen, sondern die fahrerhausseitigen Anlenkpunkte für die Hubvorrichtung an der Fahrerhausrückwand angeordnet werden können und zwar unterhalb der sich in Betriebslage befindlichen ersten Schlafliege.

Eine weitere vorteilhafte Ausgestaltung der Erfindung besteht darin, daß eine Gewichtsausgleichseinrichtung vorgesehen ist, die als eine im Bereich der Schwenkachse der Kragarme angeordnete Drehstabfeder ausgebildet ist. Diese Drehstabfeder kann über die ganze Fahrerhausbreite durchlaufen, so daß also ausreichend Länge für den Schwenkwinkel der Kragarme, der in etwa 70° beträgt, zur Verfügung steht. Darüber hinaus hat die Verwendung einer Drehstabfeder den Vorteil äußerst geringen Platzbedarfs.

Bei einer bevorzugten Ausführungsform eines erfindungsgemäßen Fahrerhauses soll die zweite Schlafliege in ihrer Neigung zu den Kragarmen mittels eines Anschlags und einer Feder festlegbar sein. Diese Ausgestaltung hat den Vorteil, daß der Anschlagpunkt so gewählt werden kann, daß die Liege bei ihrer Bewegung in die Verstaulage in einer Position am Fahrerhausdach ankommt, die parallel zu dem entsprechenden Dachabschnitt liegt, so daß die Liege nicht etwa mit Ecken oder Kanten in die innere Dachverkleidung hineinstößt.

Schließlich soll bei einer bevorzugten Ausführungsform der Erfindung für die Liege eine Arretiervorrichtung vorgesehen sein, die in Betriebs- und Verstaulage wandseitig angeordnete Halterungen aufweist, in die liegenseitig angeordnete Schließbolzen eingreifen, wobei die federbelasteten Schließbolzen über einen Seilzug entriegelbar sind. Obwohl als Arretiervorrichtung für die Liege natürlich jede im Stand der Technik bekannte Arretiervorrichtung verwendbar wäre, eignet sich diese besonders gestaltete Arretiervorrichtung für die erfindungsgemäße Vorrichtung deshalb besser als andere, weil die Schließbolzen vorzugsweise an der in Fahrtrichtung gesehen hinteren Kante der zweiten Liege angeordnet werden, die Betätigung der Arretiervorrichtung jedoch von der Vorderkante der Liege aus erfolgen muß, was mit einem Seilzug, der durch die Liege geführt und ohne Schwierigkeiten umgelenkt werden kann, besonders einfach zu bewerkstelligen ist.

Anhand der beigefügten Zeichnung wird ein Ausführungsbeispiel der Erfindung erläutert. In der Zeichnung ist in

Fig. 1 ein Fahrerhaus im Längsschnitt ausschnittweise und in

Fig. 2 eine Draufsicht auf die zweite Schlafliege entsprechend Pfeilrichtung II in Fig. 1 dargestellt.

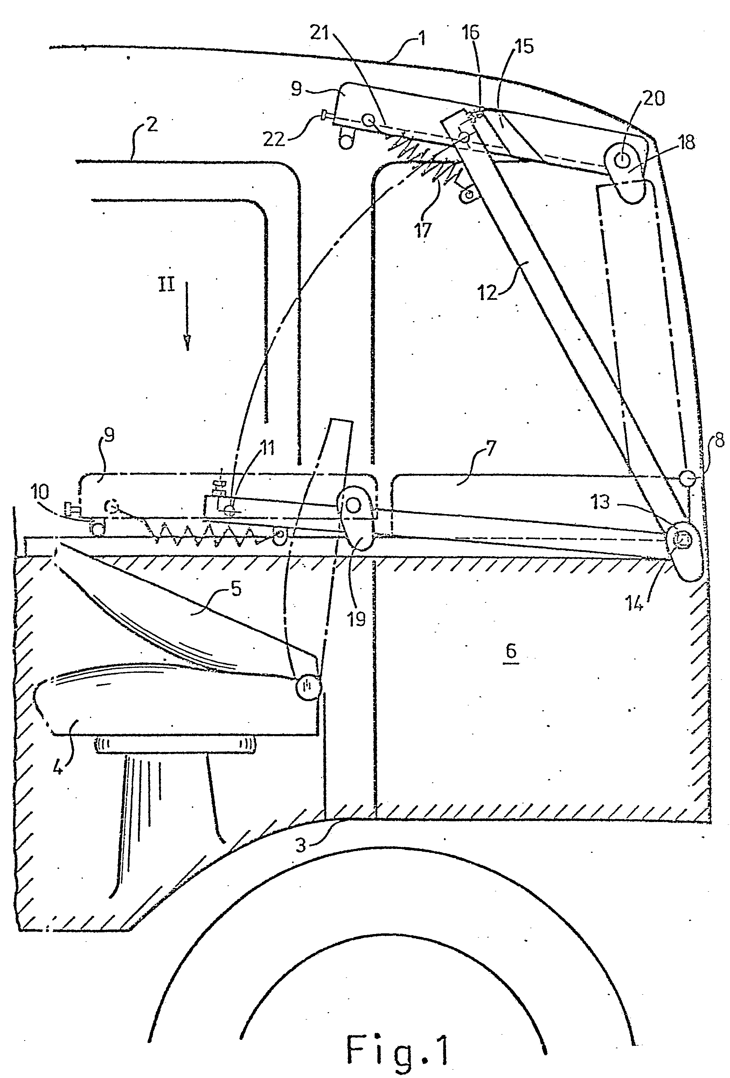

In der Fig. 1 ist die Umrißlinie eines Fahrerhauses eines Lastkraftwagens mit 1 bezeichnet. Zur Verdeutlichung der Größenverhältnisse ist noch eine Fahrerhaustür 2 und der Fußboden 3 des Fahrerhauses angedeutet. Ein Fahrer- bzw. Beifahrersitz 4 ist im Profil angegeben. Bei diesen Sitz handelt es sich um einen solchen mit einer schwenkbaren Rückenlehne 5, die aus ihrer strichpunktiert eingezeichneten Betriebsstellung in die mit vollen Linien gezeichnete Stellung vorschwenkbar ist. Im Raum zwischen den Fahrzeugsitzen und hinter den Fahrzeugsitzen bis zur Fahrerhausrückwand sind Wohnwageneinbauten 6 vorgesehen, deren Umrißlinie mit einer Grenzschraffur angedeutet ist. Oberhalb dieser Wohnwageneinbauten 6, die etwa bis zur Hälfte der zur Verfügung stehenden lichten Höhe im Fahrerhaus reichen, ist eine erste Schlafliege 7 angeordnet, die um eine entlang der Fahrerhausrückwand verlaufende waagrechte Schwenkachse 8 aus der in vollen Linien gezeichneten Betriebsstellung in eine senkrechte Verstaulage (strichpunktierte Linien) an den freien Teil der Fahrerhausrückwand hochklappbar ist. Neben der ersten Schlafliege 7 befindet sich eine zweite Schlafliege 9, die also in Fahrtrichtung gesehen vor der ersten Schlafliege 7 angeordnet ist. Die Schlafliege 9 liegt mit einem an ihrer vorderen unteren Kante angeordneten Bügel 10, der gleichzeitig als Haltegriff dient, auf den Wohnwageneinbauten 6 auf. An Kopf- und Fußende weist die zweite Schlafliege 9 Schwenklager 11 auf, an denen sie jeweils an den vorderen Enden von im Bereich der Fahrerhausseitenwände verlaufenden Kragarmen 12 aufgenommen ist. Die Schwenklager 11 befinden sich etwa in der Mitte der Schlafliege 9. Die rückwärtigen Enden der beiden Kragarme 12 sind and Widerlagern 13 im Bereich der Fahrerhausrückwand an den Fahrerhausseitenwänden unterhalb der ersten Schlafliege 7 angelenkt. Eine mit den Kragarmen 12 verbundene Drehstabfeder 14 sorgt für einen Gewichtsausgleich, so daß das Hochschwenken der zweiten Schlafliege 9 von ihrer in strichpunktierten Linien dargestellten Betriebsstellung neben der ersten Schlafliege 7 in eine Verstaulage am Dach des Fahrerhauses ohne körperliche Anstrengung möglich ist. Die Schwenklager 11 der zweiten Schlafliege 9 beschreiben dabei die in der Zeichnung ebenfalls strichpunktiert eingezeichnete Bahnkurve. Um zu vermeiden, daß die Schlafliege 9, die um die Schwenklager 11 in den Kragarmen 12 drehbar ist, mit ihrer Hinterkante in die Dachverkleidung des Fahrerhauses 1 stößt, sind am Kopf- und Fußende der Schlafliege 9 Anschläge 15 vorgesehen, die mit Einstellschrauben 16 an den Kragarmen 12 zusammenwirken. Die Schlafliege 9 wird von Zugfedern 17, die im Bereich der Vorderkante der Schlafliege 9 und an den Kragarmen 12 eingehängt sind, in eine solche Lage zu den Kragarmen 12 geschwenkt, daß die Anschläge 15 an den Einstellschrauben 16 zur Anlage kommen. Diese Position entspricht einer Parallelstellung zum Fahrerhausdach, wie sie in der Zeichnung in vollen Linien dargestellt ist. Um die Fahrerhausliege 9 sowohl in ihrer Verstaulage als auch in ihrer Betriebslage arretieren zu können, sind in Betriebs- und Verstaulage wandseitig im Fahrerhaus Halterungen 18, 19 angeordnet, die Bohrungen aufweisen, in die liegenseitig angeordnete Schließbolzen 20 eingreifen. Die Schließbolzen 20 sollen federbelastet sein und mittels einer Seilzugbetätigung 21 ausklinkbar sein. Der Seilzug 21 ist von der Hinterkante der zweiten Schlafliege 9 an deren Vorderkante geführt, wo ein Zuggriff 22 zum Ausklinken der Schließbolzen 20 vorgesehen ist.

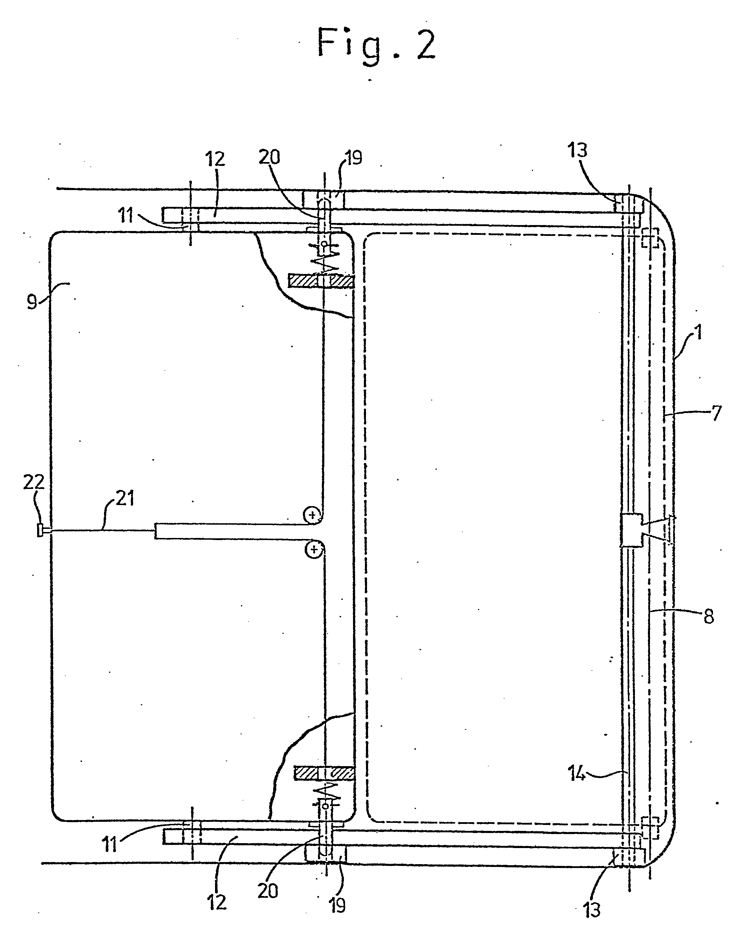

Die in Fig. 2 gezeigte Draufsicht auf die zweite Schlafliege 9 ist eine vereinfachte Darstellung, die lediglich die Lagerung dieser Schlafliege 9 an den Kragarmen 12 und deren Verriegelung mittels der Schließbolzen 20 darstellen soll. An beiden Fahrerhausseitenwänden sind Halterungen 19 mit Bohrungen angeordnet, die im heruntergeschwenkten Zustand der Schlafliege 9 mit den Schließbolzen 20 fluchten, so daß diese Schließbolzen 20 in diese Bohrungen einfallen können. Eine Entriegelung dieser Schließbolzen 20 findet dadurch statt, daß an den Zuggriff 22 und damit dem Seilzug 21 angezogen wird. Der Seilzug 21 teilt sich in zwei Zugseile auf, die über Umlenkrollen laufen und an den Schließbolzen 20 befestigt sind. Die erste Schlafliege 7 ist in Fig. 2 nur ihrem Umriß nach dargestellt. Außerdem ist die Schwenkachse 8 dieser ersten Schlafliege 7 eingezeichnet.

## Ansprüche

1. Fahrerhaus für Lastkraftwagen, in dem hinter den Sitzen Wohnwageneinbauten (6) vorgesehen sind, und eine erste an der Fahrerhausrückwand etwa in halber Höhe und über den Wohnwageneinbauten angebrachte Schlafliege (7), dadurch gekennzeichnet, daß eine zweite von der ersten unabhängige Schlafliege (9) vorgesehen ist und eine Hubeinrichtung, (11, 12, 13) mit der sie aus einer Betriebslage neben der ersten Schlafliege (7) in eine waagrechte Verstaulage oberhalb der ersten Schlafliege (7) am Fahrerhausdach verfahrbar ist.

2. Fahrerhaus nach Anspruch 1, dadurch gekennzeichnet, daß die Hubeinrichtung zwei Kragarme (12) umfaßt, die um eine waagrechte parallel zur Fahrerhausrückwand verlaufende Achse schwenkbar gelagert sind und die Schlafliege (9) an Kopf- und Fußende in Schwenklagern (11) aufnehmen.

3. Fahrerhaus nach Anspruch 1 oder 2, dadurch gekennzeichnet, daß zur Erleichterung des Hochschwenkens der zweiten Liege eine Gewichtsausgleichseinrichtung (14) vorgesehen ist.

4. Fahrerhaus nach Anspruch 3, dadurch gekennzeichnet, daß die Gewichtsausgleichseinrichtung eine im Bereich der Schwenkachse der Kragarme (12) angeordnete Drehstabfeder (14) ist.

5. Fahrerhaus nach Anspruch 2, 3 oder 4, dadurch gekennzeichnet, daß die zweite Schlafliege in ihrer Neigung zu den Kragarmen (12) mittels eines Anschlages (15) und einer Feder (17) festlegbar ist.

6. Fahrerhaus nach einem oder mehreren der vorhergehenden Ansprüche, dadurch gekennzeichnet, daß für die Liege (9) eine Arretiervorrichtung vorgesehen ist mit in Betriebs- und Verstaulage wandseitig angeordneten Halterungen (18, 19), in die liegenseitig angeordnete Schließbolzen (20) eingreifen, wobei die federbelasteten Schließbolzen (20) über einen Seilzug (21) entriegelbar sind.

## Claims

1. A driver's cab for lorries, in which caravan fittings are provided behind the seats and a first sleeping berth is arranged substantially half way up the rear wall of the driver's cab *and above the caravan fittings,* charaterized in that a second sleeping berth (9) is provided, *which is independent of the first sleeping berth,* and a lifting device (11, 12, 13) is provided for moving the second sleeping berth from a position of use adjacent the first sleeping berth (7) into a horizontal stowed position above the first sleeping berth (7) at the roof of the driver's cab.

2. A driver's cab according to Claim 1, characterized in that the lifting device comprises two cantilevers (12), which are pivotably mounted about a horizontal axis extending parallel to the rear wall of the driver's cab, and which are connected to the head end and foot end of the sleeping berth (9) by means of swivel bearings (11).

3. A driver's cab according to Claim 1 or 2, characterized in that a weight equalizing device (14) is provided to facilitate the upward pivoting of the second berth.

4. A driver's cab according to Claim 3, characterized in that the weight equalizing device is a torsion-bar spring (14) arranged in the region of the axis of rotation of the cantilevers (12).

5. A driver's cab according to Claim 2, 3 or 4, characterized in that the second sleeping berth can be secured in an inclined position with respect to the cantilevers (12) by means of a stop (15) and a spring (17).

6. A driver's cab according to one or several of the preceding Claims, characterized in that a locking device is provided for the berth (9), and comprises mountings (18, 19) arranged on the side walls of the cab in the position of use and in the stowed position of the second berth, the mountings being engageable by locking pins (20) carried by the berth, the spring-loaded pins (20) being releasable by means of a cable (21).

## Revendications

1. Cabine de conduite pour camions dans laquelle sont prévus derrière les sièges de conducteurs des aménagements de caravane ainsi qu'une première couchette installée sur la paroi arrière de la cabine de conduite environ à mi-hauteur et au-dessus des aménagements de caravane, cabine de conduite caractérisée en ce qu'il est prévu une deuxième couchette (9), indépendante de la première couchette (7), ainsi qu'un dispositif de levage (11, 12, 13) par lequel cette deuxième couchette (9) peut être transférée d'une position de service à côté de la première couchette (7) en une position de rangement horizontale au-dessus de la première couchette (7) contre le toit de la cabine de conduite.

2. Cabine de conduite selon la revendication 1, caractérisée en ce que le dispositif de levage comporte deux bras (12) en porte-à-faux montés de façon à pouvoir pivoter autour d'un axe horizontal parallèle à la paroi arrière de la cabine de conduite et qui supportent la couchette (9) à la tête et au pied dans des paliers pivotants (11).

3. Cabine de conduite selon l'une quelconque des revendications 1 ou 2, caractérisée en ce qu'il est prévu un dispositif de compensation de poids (14) pour faciliter le pivotement vers le haut de la deuxième couchette (9).

4. Cabine de conduite selon la revendication 3, caractérisée en ce que ce dispositif de compensation de poids est une barre de torsion (14) disposée dans la zone de l'axe de pivotement des bras en porte-à-faux (12).

5. Cabine de conduite selon l'une quelconque des revendications 2 à 4, caractérisée en ce que l'inclinaison de la deuxième couchette par rapport aux bras en porte-à-faux (12) est susceptible d'être stabilisée au moyen d'une butée (15) et d'un ressort (17).

6. Cabine de conduite selon l'une quelconque des revendications 1 à 5, caractérisée en ce qu'il est prévu un dispositif d'arrêt pour la couchette (9), avec des supports (18, 19) disposés sur les parois en position d'utilisation ou de rangement et dans lesquels viennent en prise des goujons de verrouillage (20) disposés sur le côté supporté, ces goujons de verrouillage (20) sollicités par des ressorts pouvant être déverrouillés par la traction d'un câble (21).

Fig.1

# Fig. 2